(19)

Europäisches
Patentamt
European
Patent Office
Office européen
des brevets

(11) **EP 2 833 303 A1**

(12) **EUROPEAN PATENT APPLICATION**

(43) Date of publication:
**04.02.2015 Bulletin 2015/06**

(51) Int Cl.:
**G06Q 10/04** *(2012.01)*

(21) Application number: **13178377.1**

(22) Date of filing: **29.07.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Siemens AG Österreich**
**1210 Wien (AT)**

(72) Inventor: **Haselböck, Alois**
**3392 Schönbühel-Aggsbach (AT)**

(74) Representative: **Maier, Daniel Oliver**
**Siemens AG**
**Postfach 22 16 34**
**80506 München (DE)**

(54) **Method for solving multidimensional optimization problems**

(57)  The application concerns method for solving multidimensional optimization problems on a set of feasible solutions of a discrete combinatorial problem. The method comprises the steps of: calculating optimization values for the set of feasible solutions by using a set of optimization functions, calculating mean values and standard deviation values to the set of optimization functions, normalizing the optimization values, accumulating the normalized optimization values, finding a minimum for the accumulated normalized optimization values.

EP 2 833 303 A1

$$\text{Solution } S_i$$

$$f_1(S_i) \quad \cdots \quad f_k(S_i)$$

$$\text{norm}(f_1(S_i)) \quad \cdots \quad \text{norm}(f_k(S_i))$$

$$w_1 * \text{norm}(f_1(S_i)) \quad \cdots \quad w_k * \text{norm}(f_k(S_i))$$

$$\sum_{j=1}^{k} w_j * \text{norm}(f_j(S_i))$$

**Description**

The invention concerns a method for solving multidimensional optimization problems on a set of feasible solutions of a discrete combinatorial problem.

In many economical and technical domains, discrete combinatorial problems play an important role for problem formulation and reasoning. Examples of such discrete combinatorial problems are:

- The knowledge-based configuration of products and services as described in *http://en.wikipedia.org/wiki/Knowledge-based_configuration;*

- product line engineering, which has established itself as a standard practice for exploiting the commonalities among a family of products and managing the variabilities among them in a systematic way;

- recommender systems, which are used for predicting the rating a user would give to a certain product or piece of information;

- scheduling, that are methods by which threads, processes or data flows are given access to system resources, e.g. processor time or communications bandwidth;

- decision support systems, that are computer-based information system that supports business or organizational decision-making activities;

- "OR problems" as described in C.H.Papadimitriou, K. Steiglitz. Combinatorial Optimization: Algorithms and Complexity. Prentice-Hall, 1982*; second edition, Dover, 1998.*

In a general way, discrete combinatorial problems are defined as follows: Given are a problem domain description and a set of requirements for a concrete problem (e.g., both in form of a logical theory). The task is to find one or all solutions to the concrete problem.

The solutions which obey the domain description and the requirements are called feasible solutions S $= \{S_1, ..., S_n\}$.

Searching for feasible solutions is often not enough, but the subset of feasible solutions which minimize or maximize several optimization criteria are of interest.

The tasks to find this solutions are known as multidimensional optimization problems.

Optimization criteria are represented as optimization functions

$$f_i \; : \; S \; \rightarrow \; \mathbb{R}$$

computing a numeric optimization value for each solution. The set of best solutions $S^* \subseteq S$ contains those solutions $S_j$ which minimize all the optimization functions.

There are two major models how to deal with multiple optimization criteria: Pareto optimality as described in *http://en.wikipedia.org/wiki/Pareto_efficiency* and the weighted sum model.

The weighted sum model simply condenses all the optimization function to a single function by summing them up. Usually weight factors are involved to represent the importance of the different optimization criteria. min

$$\sum_{j=1}^{k} w_j * f_j(S_i) \; ,$$ for solutions $S_i$, k optimization criteria,

and weights $w_j$ for each criterion j

Examples of optimization criteria are:

- price (of unit Euro)
- maintenance costs (of unit h/year)
- $CO_2$ footprint (of unit kg/year)
- power consumption (of unit W)

We see that all these criteria are of different units, so, mathematically, it does not make any sense to directly sum them up. They have to be normalized to a common unit system. A normalization function is a projection from one range (unit system) to another (the common unit system).

Known systems for representing and solving discrete combinatorial problems can cope only with a single optimization function. Examples of such systems are ILOG, CHOCO, or Answer Set Programming systems like Potassco DLV.

To use these systems for multidimensional optimization problems, the multiple optimization functions must be accumulated to a single optimization function. The main approach is a weighted sum model .

In this approach, the crucial step is to normalize the different optimization functions to a standard unit system. To define robust normalization functions is not a trivial task and is usually done in a heuristic way by analyzing the range of the optimization function and designing the normalization projection. E.g., the range of an optimization criterion "CO2 footprint" (of unit kg/year) depends on the various parts in the component catalogue, the selection of parts for a solution and the size of the solution. It is often difficult to find meaningful minimum and maximum values.

Often, the min-max model is used, where the minimum and maximum optimization function value is computed or estimated. The projection function of the min-max normalization model is then:

$$norm(f_j(S_i)) = \frac{f_j(S_i) - \min}{\max - \min}$$

The values of an optimization function are often not distributed equally throughout all possible solutions, leading to deformations of the overall optimization value.

The disadvantages of such heuristic normalization functions are that they must be designed separately for each optimization criterion and each domain, they may lead to faulty calculations if not the whole range has been taken into account (e.g., if lower or higher values than the estimated min and max values show up), and they may lead to deformations of the optimization functions if the value distribution of the raw data does not match the value distribution of the normalized data.

It is a goal of this invention is to disclose a more robust, general and domain-independent model for normalization functions.

This is done with a method according to claim 1.

The new normalization method is completely domain-independent. It can be applied to every normally distributed optimization function in a general way. This will reduce modelling time and code complexity.

- The new normalization method is based on standard statistics methods and is very easy to understand and to compute.
- Because of its general and domain-independent nature, the new normalization method is robust. E.g., during the modelling phase, when standard deviations of optimization functions are computed, standard outlier detection methods can easily be integrated to avoid distorted normalization functions. In contrast, heuristic normalization functions sometimes must use artificial cut-offs for the projection function which may lead to the same optimization values for different raw values.

By having a simple and robust method for the definition of normalization functions, the application of multidimensional optimization is easier to implement. This gets more and more important in the future, where not only the price of a system (e.g. a configured product) is to be taken into account, but also other criteria like

- sustainability: a higher rating of products which consist of sustainable parts and materials, and which contribute to a sustainable usage of valuable resources
- green technology: higher rating of products which consist of regional resources (shorter routes of transport, promotion of local economy), which are produced with less environmental pollution, which have a longer span of life, ...
- strategic preferences: higher rating of products which are, e.g., currently available in stock.

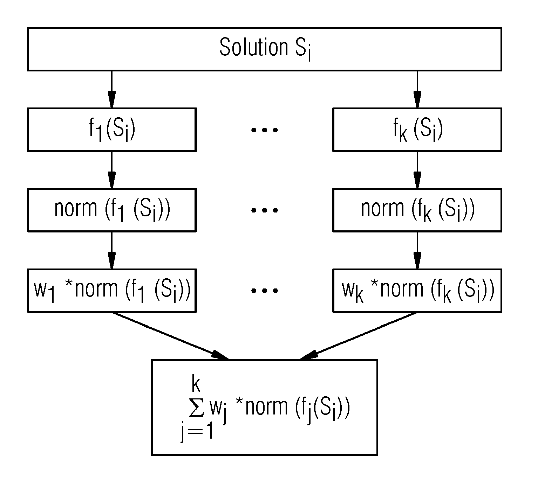

The method according to the invention is exemplified with an example shown in Fig. 1

Fig. 1 shows the calculation schema for accumulation of several optimization values to a single optimization value.

The task of normalizing optimization criteria with different units (e.g. price in Euro, $CO_2$ footprint in kg/year, maintenance costs in h/year) to a standard unit so that they can be accumulated to a single optimization value is usually done by heuristic, domain-dependent normalization functions.

According to the invention, standard deviation is used for normalization.

The process is described in the following:

Let be S the set of all feasible solutions to a discrete combinatorial problem.

Let $S_{sample} = \{S_1, ..., S_n\}$ be a set of sample solutions. This set of sample solutions is a subset of all feasible solutions S. The sample solutions must be a representative set of solutions. An example of such a set of sample solutions is the set of products sold in the last time period.

Let $\{f_1, ..., f_k\}$ be a set of optimization functions. An optimization function $f_i: S \rightarrow \mathbb{R}$ is a function which computes a "raw" (i.e., un-normalized) optimization value for a solution.

Let $\mu(f_i)$ be the mean value [15] of optimization function $f_i$:

$$\mu(f_i) = \frac{1}{n} * \sum_{j=1}^{n} f_i(S_j)$$

Let $s(f_i)$ be the adjusted standard deviation [16] of optimization function $f_i$ (see figure 5.2):

$$s(f_i) = \sqrt{\frac{1}{n-1} \sum_{j=1}^{n} (f_i(S_j) - \mu(f_i))^2}$$

With the use of the mean value and the standard deviation computed from the set of sample solutions S1 ... Sn, we compute the optimization criterion value for an arbitrary new solution Sol (member of feasible solutions S). The normalized optimization criterion value of an arbitrary solution Sol is then defined by:

$$norm(f_i(Sol)) = \frac{f_i(Sol) - \mu(f_i)}{s(f_i)}$$

So the normalized optimization value is the raw value shifted by the mean value and divided by the standard deviation. In fact, it is the amount of standard deviations the actual raw value differs from the mean value and therefore a very convenient measurement of the quality of a solution. Theoretically, the range of that new normalization function is $\mathbb{R}$, , but most of the values will group around the mean value. E.g., about 68% of the values will lie within +/-1 standard deviation around the mean value. Examples:

**norm($f_i$(Sol)) =0** : the normalized value is exactly the mean value

**norm($f_i$(Sol)) =-0.5** : the normalized value is a half standard deviation better than the mean value

**norm($f_i$(Sol)) =2.3** : the normalized value is 2.3 standard deviations worse than the mean value

Normalized values of different optimization functions can now easily be compared with each other, because they are of the same unit: the standard deviation.

If weights $w_i$ are used to differentiate between high and less important criteria, the accumulated optimization value for a solution Sol is then defined by:

$$f(Sol) = \frac{1}{\sum_{i=1}^{k} w_i} * \sum_{i=1}^{k} w_i * norm(f_i(Sol))$$

For a concrete combinatorial problem with technically feasible solutions $S_1$, ..., $S_n$, the goal is to find the one(s) with minimal value of f:

$$\min_{i=1}^{n} f(S_i)$$

**Claims**

1. Method for solving multidimensional optimization problems on a set of feasible solutions $\{S_1, ..., S_n\}$ of a discrete combinatorial problem comprising steps of:

   - calculating optimization values for the set of feasible solutions $\{S_1, ..., S_n\}$ by using a set of optimization functions $\{f_1, ..., f_k\}$
   - calculating mean values $\mu(f_i)$ to the set of optimization functions $\{f_1, ..., f_k\}$ according to

   $$\mu(f_i) = \frac{1}{n} * \sum_{j=1}^{n} f_i(S_j)$$

   - calculating standard deviation values s(f) to the set of optimization functions $\{f_1, ..., f_k\}$ according

to

$$s(f_i) = \sqrt{\frac{1}{n-1} \sum_{j=1}^{n} (f_i(S_j) - \mu(f_i))^2}$$

   - normalize the optimization values for the set of feasible solutions $\{S_1, ..., S_n\}$ according to

   $$norm(f_i(Sol)) = \frac{f_i(Sol) - \mu(f_i)}{s(f_i)}$$

   - accumulate the normalized optimization values **norm($f_i$(Sol))** according to

   $$f(Sol) = \sum_{i=1}^{k} norm(f_i(Sol))$$

   - find a minimum for the accumulated normalized optimization values $\min_{i=1}^{n} f(S_i)$

2. Method for solving multidimensional optimization problems according to claim 1, **characterized in, that** the accumulation is based on weighted normalized optimization values according to

   $$f(Sol) = \frac{1}{\sum_{i=1}^{k} w_i} * \sum_{i=1}^{k} w_i * norm(f_i(Sol)) .$$

Solution $S_i$

$f_1(S_i)$ ··· $f_k(S_i)$

$\text{norm}(f_1(S_i))$ ··· $\text{norm}(f_k(S_i))$

$w_1 * \text{norm}(f_1(S_i))$ ··· $w_k * \text{norm}(f_k(S_i))$

$$\sum_{j=1}^{k} w_j * \text{norm}(f_j(S_i))$$

**EUROPEAN SEARCH REPORT**

Application Number

EP 13 17 8377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC.<br><br>----- | | INV.<br>G06Q10/04 |

TECHNICAL FIELDS
SEARCHED (IPC)

G06Q

The present search report has been drawn up for all claims

| Place of search | Date of completion of the search | Examiner |
|---|---|---|
| Munich | 2 December 2013 | Hopper, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C.H.PAPADIMITRIOU ; K. STEIGLITZ.** Combinatorial Optimization: Algorithms and Complexity. Prentice-Hall, 1982

- COMBINATORIAL OPTIMIZATION: ALGORITHMS AND COMPLEXITY. Dover, 1998